# EUROPEAN PATENT APPLICATION

(11) **EP 4 538 573 A1**
(43) Date of publication of application: **16.04.2025**
(21) Application number: 22945148.9
(22) Date of filing: 06.06.2022
(51) Int. Cl.: F16L 21/06

(54) **PIPE CONNECTION SYSTEM**

(71) Applicant: Jinan Mech Valve Technology Co., Ltd., Jinan, Shandong 250400 (CN)
(72) Inventor: YANG, Haining, Jinan, Shandong 250400 (CN); WANG, Shixin, Jinan, Shandong 250400 (CN); LI, Cunfu, Jinan, Shandong 250400 (CN); ZHANG, Yanqing, Jinan, Shandong 250400 (CN); GUAN, Jinhua, Jinan, Shandong 250400 (CN); CUI, Xiaoming, Jinan, Shandong 250400 (CN); WU, Xiuting, Jinan, Shandong 250400 (CN)
(74) Representative: Patentanwälte Magenbauer & Kollegen Partnerschaft mbB
(86) International application number: PCT/CN2022/097037
(87) International publication number: WO 2023/235998

(57) **Abstract**

The present invention relates to a pipe connection system (100), comprising: a sleeve (1) for receiving a pipe; a sealing assembly (2) for clamping the pipe and axially sealing the pipe; and a pressurizing device (5), the pressurizing device (5) cooperates with the sleeve (1) to lock the sealing assembly (2) on the pipe; the sealing assembly (2) comprises a sealing ring (3) and an annular closed self-locking structure formed by a plurality of identical self-locking units (4) connected in series, wherein the self-locking unit (4) comprises a self-locking body (41) and a clamping sheet (42) which is separate from the self-locking body and assembled in the self-locking body.

## Description

### Technical Field

The present invention relates to a field of pipe compensation joint sealing, and is applied to pipe connection and installation in various engineering construction industries such as buildings, roads, bridges or the like. More specifically, the present invention relates to a pipe connection system.

### Background Art

Currently, existing technologies for connecting pipes mostly use connection methods such as flange connection, groove connection, welding technology or the like. Flange connection and groove connection require connection structures such as flange, groove or the like, which are relatively bulky and cumbersome. Welding technology requires a welding machine, which cannot achieve fast, safe and convenient connection of pipes.

### Summary of the invention

One purpose of the present invention is to achieve connection of pipes simply and quickly, and to solve the problem that pipes cannot be connected when the pipes have no connection structures such as flanges, grooves or the like.

Another purpose of the present invention is to achieve connection of pipes simply and quickly, to solve the problem of using a welding machine when welding pipes, to solve the unsafe problem during engineering installation, and can directly connect pipes to achieve purpose of sealing and connecting of pipes without using naked flames, which is safe and efficient.

In one aspect, the present invention provides a pipe connection system, comprising:
a sleeve for receiving a pipe;
a sealing assembly for gripping the pipe and axially sealing the pipe; and
a pressurizing device, the pressurizing device cooperates with the sleeve to lock the sealing assembly on the pipe;
the sealing assembly comprises a sealing ring and an annular closed self-locking structure formed by a plurality of identical self-locking units connected in series, wherein the self-locking unit comprises a self-locking body and a clamping sheet which is separate from the self-locking body and assembled in the self-locking body,
when the pressurizing device applies axial force, wedge-shaped contact between the pressurizing device and the sleeve axially with the sealing assembly causes radial force to act on the sealing assembly, so that the clamping sheet clamps and locks the pipe and the sealing ring provides axial sealing for the pipe.

Preferably, the clamping sheet is made of a material different from the self-locking body.

Preferably, the clamping sheet is made of metal, and the self-locking body is made of plastic.

Preferably, the sealing ring is made of an elastomeric material.

Preferably, the self-locking body includes a first side surface and a second side surface which are arranged opposite to each other in the circumferential direction of the pipe, the first side surface of the self-locking body is provided with at least one mounting groove, the second side surface of the self-locking body is provided with at least one sliding tongue, and the at least one sliding tongue protrudes outward from the second side surface, for being inserted into and locked in the at least one mounting groove.

Preferably, an end of the sliding tongue away from the second side surface is provided with a pair of radial flanges, and an end of the mounting groove close to the first side surface is provided with a pair of mating lips. When the sliding tongue of one self-locking unit is inserted into the mounting groove of another adjacent self-locking unit, the flange of the sliding tongue is elastically expanded and at least partially overlaps with the lip of the mounting groove in a radial direction of the pipe, so as to prevent the sliding tongue of the self-locking unit from being pulled out of the mounting groove of the adjacent self-locking unit, while allowing the sliding tongue of the self-locking unit to slide circumferentially in the mounting groove of the adjacent self-locking unit, so as to adjust an inner diameter of the annular closed self-locking structure.

Preferably, the self-locking body is provided with a weight-reducing groove and a buffer hole.

Preferably, the clamping sheet comprises a first surface facing the pipe and an opposite second surface, and the first surface is provided with protrusions for increasing friction with the pipe.

Preferably, the first surface is parallel to a central axis of the pipe, and an angle greater than 0 ° and less than 15 ° is formed between the second surface and the first surface, thereby forming a wedge-shaped clamping sheet.

Preferably, the angle is 5 °.

Preferably, the sealing ring comprises an annular body defining a first inclined contact surface, a collar portion extending axially inward from a radial inner perimeter of the annular body and defining a first circumferential contact surface, and a flange portion extending radially outward from an axial inner end of the collar portion,
the self-locking body includes a second inclined contact surface in contact with the first inclined contact surface of the sealing ring, a second circumferential contact surface in contact with the first circumferential contact surface of the sealing ring, and a groove for receiving the flange portion of the sealing ring,
wherein the first inclined contact surface of the sealing ring cooperates with the second inclined contact surface of the self-locking body, and the first circumferential contact surface of the sealing ring cooperates with the second circumferential contact surface of the self-locking body, thereby forming the sealing assembly.

Preferably, the sealing ring further comprises an axial flange extending axially inward from a radial outer perimeter of the annular body and defining a third circumferential contact surface, a radial outer portion of the self-locking body defines a fourth circumferential contact surface, and the third circumferential contact surface of the sealing ring contacts with the fourth circumferential contact surface of the self-locking body.

Preferably, an inner perimeter of the collar portion of the sealing ring is provided with a threaded portion to enhance sealing effect.

Preferably, the sealing assembly further comprises an elastic ball, which is configured to be able to deform axially under the action of a force in the axial direction of the pipe, so that the clamping sheet can move axially relative to the self-locking body, thereby increasing clamping force when being pressurized, and accommodating to movement of the pipe.

According to the present invention, when the pressurizing device applies an axial force, wedge-shaped contact between the pressurizing device and the sleeve axially with the sealing assembly causes radial force to act on the sealing assembly, so that the clamping sheet clamps and locks the pipe and the sealing ring provides axial sealing for the pipe, thereby achieving a quick connection of the pipe.

The technical solution of the present invention provides the following technical effects:
The mounting grooves and sliding tongues on the self-locking units make assembly of the product easy and efficient.

The sliding tongue of the self-locking unit is designed with relatively large size, making the product more robust and less prone to damage.

The design of weight-reducing grooves and buffer holes reduces the weight of the product, which not only can play a buffering role when the pressurizing device is pressurized, but also can save costs.

During injection molding, the clamping sheet is installed into the self-locking body, making the product more robust and less prone to damage.

The elastic ball is added, by means of elasticity of the elastic ball, the displacement of the clamping sheet on the self-locking body is realized, thereby increasing clamping force when being pressurized, and accommodating to movement of the pipe.

The design of wedge-shaped clamping sheet prevents the pipe from automatically falling off when the pressurizing device is released.

Other exemplary embodiments of the present invention are obvious from the detailed description provided below. It should be understood that the detailed description and specific examples, while disclosing exemplary embodiments of the present invention, are intended for illustration purposes only and are not intended to limit the scope of the invention.

### BRIEF DESCRIPTION OF THE DRAWINGS

At least one embodiment will be described below with reference to the following drawings, wherein identical reference numerals refer to identical elements.
FIG. 1 is a schematic assembly view of a pipe connection system according to one embodiment of the present invention.
FIG. 2 is a top view of a pipe connection system according to one embodiment of the present invention.
FIG. 3 is a sectional view of the pipe connection system taken along line A-A of FIG. 2.
FIG. 4 is a perspective view of a sleeve according to one embodiment of the present invention.
FIG. 5 is a perspective view of a pressurizing device according to one embodiment of the present invention.
FIG. 6 is a perspective view of a sealing assembly according to one embodiment of the present invention.
FIG. 7A is a perspective view of a self-locking unit according to one embodiment of the present invention.
FIG. 7B is a perspective view of the self-locking unit according to one embodiment of the present invention viewed from another angle.
FIG. 8 is a perspective view of a sealing ring according to one embodiment of the present invention.
FIG. 9 is a perspective view of a sealing ring according to another embodiment of the present invention.
FIG. 10 is a perspective view of a self-locking unit according to another embodiment of the present invention.
FIG. 11 is a perspective view of a clamping sheet of the self-locking unit shown in FIG. 10.
FIG. 12 is a perspective view of an elastic ball of the self-locking unit shown in FIG. 10.

The foregoing and other features of the present disclosure will become more fully apparent from the following description and appended claims, taken in conjunction with the accompanying drawings. Understanding that these drawings depict only several embodiments in accordance with the disclosure and are not to be considered limiting of its scope, the disclosure will be described with additional specificity and detail through the use of the accompanying drawings. Any dimensions disclosed in the drawings or elsewhere herein are for the purpose of illustration only.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present disclosure. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Certain terminology may be used in the following description for the purpose of reference only, and thus are not intended to be limiting. For example, terms such as "above" and "below" refer to directions in the drawings to which reference is made. Terms such as "front," "back," "left," "right," "rear," and "side" describe the orientation and/or location of portions of the components or elements within a consistent but arbitrary frame of reference which is made clear by reference to the text and the associated drawings describing the components or elements under discussion. Moreover, terms such as "first," "second," "third," and so on may be used to describe separate components. Such terminology may include the words specifically mentioned above, derivatives thereof, and words of similar import.

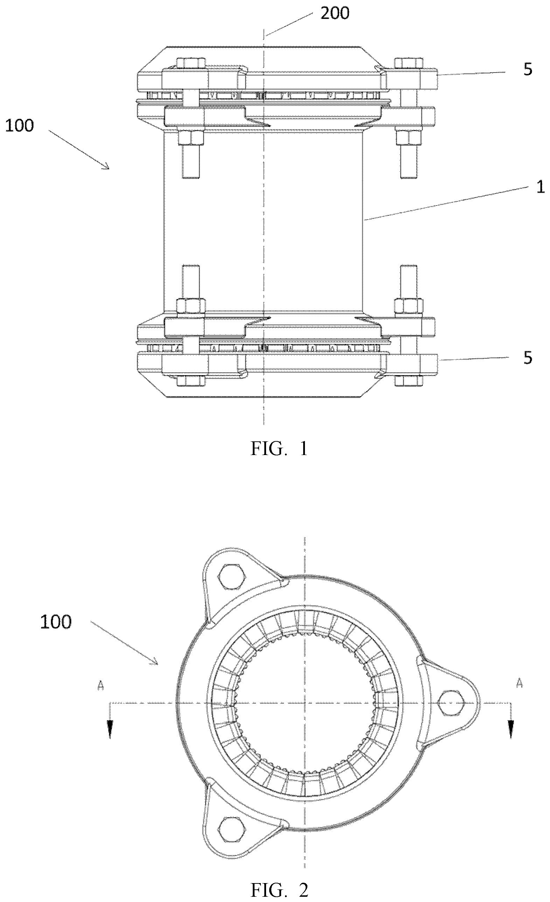

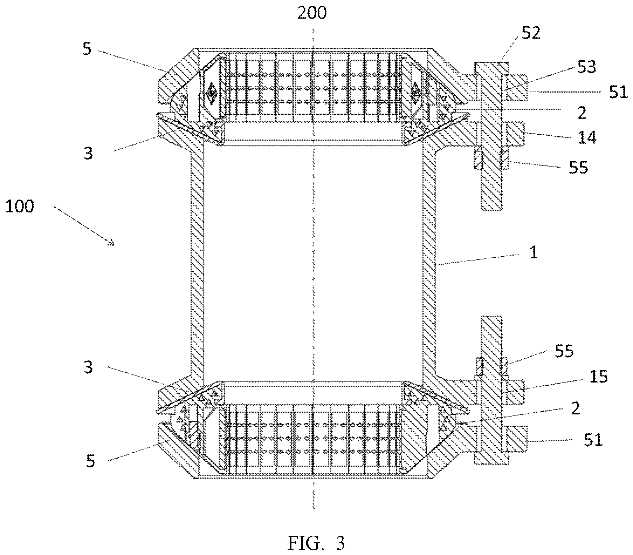

FIG. 1 is a schematic assembly diagram of a pipe connection system 100 according to one embodiment of the present invention. FIG. 2 is a top view of a pipe connection system 100 according to one embodiment of the present invention. FIG. 3 is a sectional view of the pipe connection system 100 taken along line A-A of FIG. 2. Referring to FIG. 1, one embodiment of the present invention provides a pipe connection system 100, which comprises a sleeve 1 for receiving a pipe; a sealing assembly 2 for clamping the pipe and axially sealing the pipe; and a pressurizing device 5 cooperating with the sleeve 1 to lock the sealing assembly 2 on the pipe.

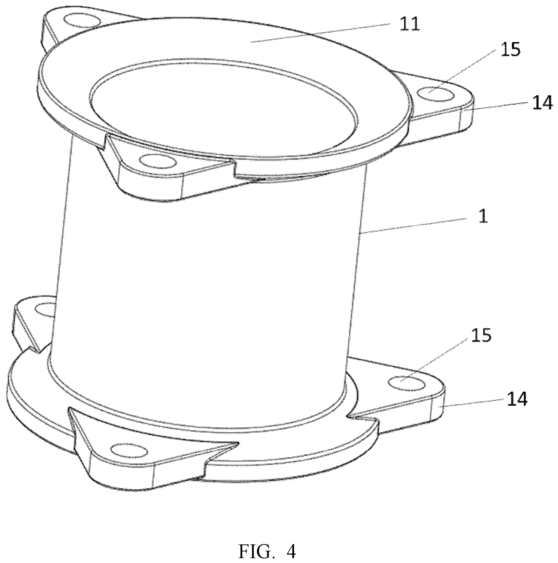

FIG. 4 is a perspective view of a sleeve 1 according to one embodiment of the present invention. The sleeve 1 is shown as a tubular body with two axially opposite ends comprising lips defining a fourth inclined contact surface 11. In the context of the present invention, "inclined" means extending obliquely relative to a plane perpendicular to the central axis of the pipe or sleeve.

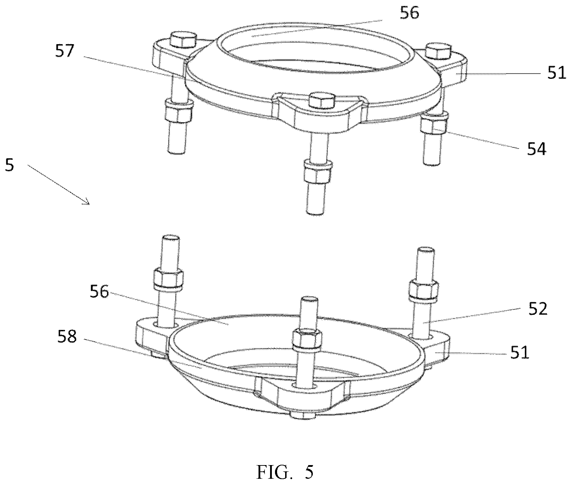

FIG. 5 is a perspective view of a pressurizing device 5 according to one embodiment of the present invention. According to one example of the present invention, the pressurizing device 5 includes a first cover portion 57 and a second cover portion 58, and the first cover portion 57 and the second cover portion 58 define a third inclined contact surface 56. Correspondingly, two axially opposite ends of the sleeve 1 include lips defining a fourth inclined contact surface 11. The third inclined contact surface 56 of the pressurizing device 5 defines a wedge shape together with the fourth inclined contact surface 11 of the sleeve 1, and cooperates with the wedge shape of the self-locking body 41 to convert axial force of the pressurizing device 5 into radially acting force of the sealing assembly 2, so as to clamp and seal the pipe.

According to one example of the present invention, the pressurizing device 5 further comprises a plurality of first flange portions 51 extending outward from outer perimeter of the first cover portion 57 and the second cover portion 58, and each corresponding end of the sleeve 1 includes a corresponding plurality of second flange portions 14, each first flange portion 51 defines a first hole 53, and each second flange portion 14 defines a second hole 15.

According to one example of the present invention, the pressurizing device 5 further comprises a corresponding plurality of fasteners, including, for example, a screw 52 and a nut 55, the screw 52 passing through the first hole 53 and the second hole 15. It should be understood that the fasteners can utilize any other suitable form, such as a stud and two nuts, without departing from the scope of the present invention. Although the drawings show that the first cover 57 and the second cover 58 each include three first flange portions 51, and each corresponding end of the sleeve 1 includes three second flange portions 14, it should be understood that the present invention can utilize any other suitable number of first flange portions 51 and second flange portions 14, such as 4, 5 or the like, without departing from the scope of the present invention.

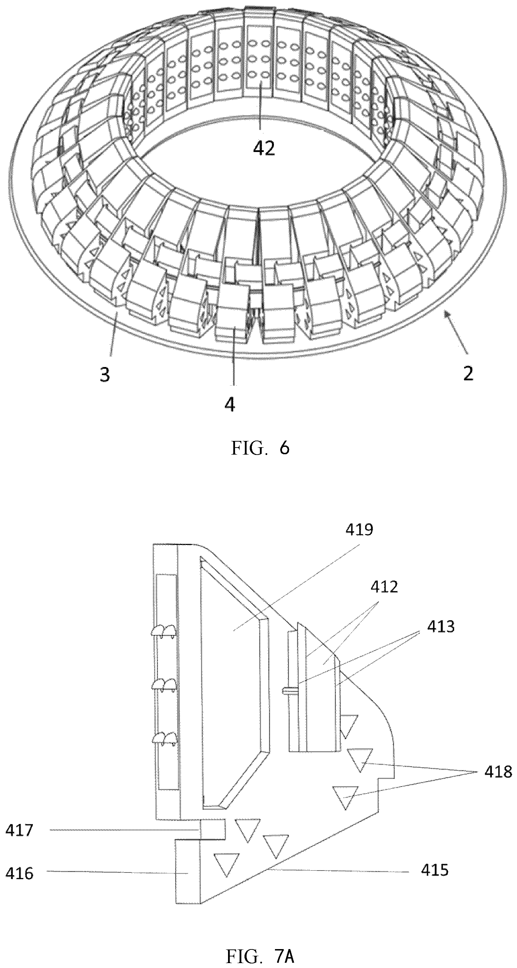

Fig. 6 is a perspective view of a sealing assembly 2 according to one embodiment of the present invention. The sealing assembly 2 comprises a sealing ring 3 and an annular closed self-locking structure formed by a plurality of identical self-locking units 4 connected in series, wherein the self-locking unit 4 comprises a self-locking body 41 and a clamping sheet 42 which is separate from the self-locking body 41 and assembled in the self-locking body 41. By forming the clamping sheet 42 independently from the self-locking body 41, the sealing assembly 2 can be manufactured at a lower cost while providing convenience and quickness of assembly.

According to one example of the present invention, the clamping sheet 42 is made of a material different from the self-locking body 41. According to one example of the present invention, the clamping sheet 42 is made of metal and the self-locking body 41 is made of plastic. It should be understood that the clamping sheet 42 and the self-locking body 41 can be formed of any other suitable material without departing from the scope of the present invention.

When the pressurizing device 5 applies axial force, wedge-shaped contact between the pressurizing device 5 and the sleeve 1 axially with the sealing assembly 2 causes radial force to act on the sealing assembly 2, so that the clamping sheet 42 clamps and locks the pipe and the sealing ring provides axial sealing for the pipe.

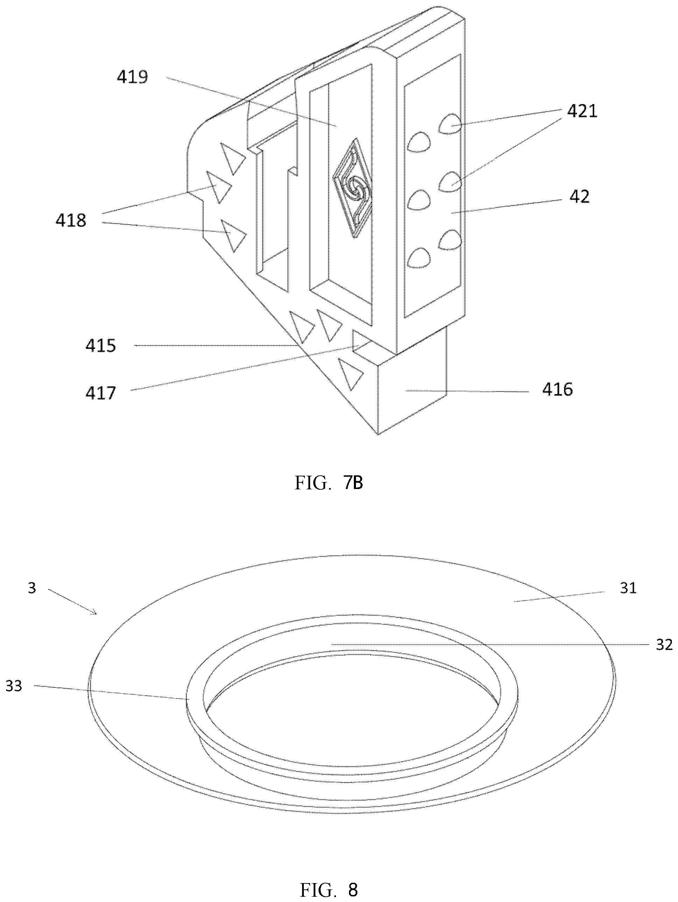

Fig. 7A is a perspective view of a self-locking unit 4 according to one embodiment of the present invention. Fig. 7B is a perspective view of the self-locking unit 4 according to one embodiment of the present invention viewed from another angle.

Fig. 8 is a perspective view of a sealing ring 3 according to one embodiment of the present invention. According to one example of the present invention, the sealing ring 3 includes an annular body defining a first inclined contact surface 31, a collar portion 32 extending axially inward from a radial inner perimeter of the annular body and defining a first circumferential contact surface, and a flange portion 33 extending radially outward from an axial inner end of the collar portion 32. According to one example of the present invention, the sealing ring 3 is made of an elastomeric material.

In the present invention, due to the structure of the sealing ring 3, the sealing ring 3 can reliably provide axial sealing of the pipe. In addition, after the self-locking unit 4 is assembled into the annular closed self-locking structure, the annular body, the collar portion 32 and the flange portion 33 of the sealing ring 3 can temporarily fix the annular closed self-locking structure, which further provides convenience of assembly.

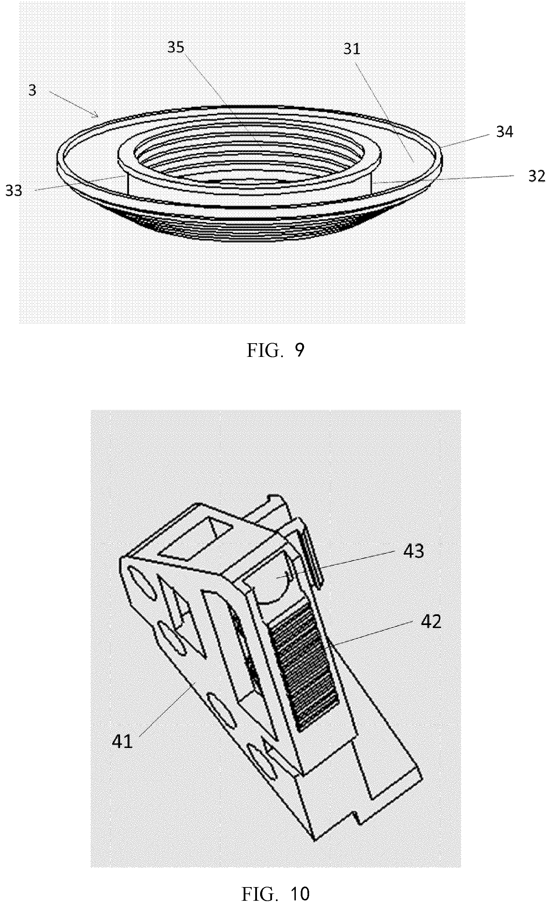

Fig. 9 is a perspective view of a sealing ring 3 according to another embodiment of the present invention. As shown in Fig. 9, the sealing ring 3 further comprises an axial flange 34 extending axially inward from a radial outer perimeter of the annular body and defining a third circumferential contact surface, a radial outer portion of the self-locking body 41 defines a fourth circumferential contact surface, and the third circumferential contact surface of the sealing ring 3 contacts with the fourth circumferential contact surface of the self-locking body 41.

According to one example of the present invention, an inner perimeter of the collar portion 32 of the sealing ring 3 is provided with a threaded portion 35 to enhance sealing effect. The threaded portion 35 can extend along a part of the inner perimeter of the collar portion 32, or can extend along the entire inner perimeter of the collar portion 32.

Fig. 10 is a perspective view of a self-locking unit 4 according to another embodiment of the present invention. The self-locking unit 4 includes a self-locking body 41 and a clamping sheet 42 which is separate from the self-locking body 41 and assembled in the self-locking body 41. By forming the clamping sheet 42 independently from the self-locking body 41, the sealing assembly 2 can be manufactured at a lower cost while providing convenience and quickness of assembly.

According to one example of the present invention, the self-locking body 41 includes a second inclined contact surface 415 in contact with the first inclined contact surface 31 of the sealing ring 3, a second circumferential contact surface 416 in contact with the first circumferential contact surface of the sealing ring 3, and a groove 417 for receiving the flange portion 33 of the sealing ring 3. The first inclined contact surface 31 of the sealing ring 3 cooperates with the second inclined contact surface 415 of the self-locking body 41, and the first circumferential contact surface of the sealing ring 3 cooperates with the second circumferential contact surface 416 of the self-locking body 41, thereby forming the sealing assembly 2.

According to one example of the present invention, the self-locking body 41 includes a first side surface and a second side surface arranged opposite to each other in a circumferential direction of the pipe, the first side surface of the self-locking body 41 is provided with at least one mounting groove 411, and the second side surface of the self-locking body 41 is provided with at least one sliding tongue 412, and at least one sliding tongue 412 protrudes outward from the second side surface, for being inserted into and locked in at least one mounting groove 411.

According to one example of the present invention, an end of the sliding tongue 412 away from the second side surface is provided with a pair of radial flanges 413, and an end of the mounting groove 411 close to the first side surface is provided with a pair of mating lips 414. When the sliding tongue 412 of one self-locking unit 4 is inserted into the mounting groove 411 of another adjacent self-locking unit 4, the flange 413 of the sliding tongue 412 is elastically expanded and at least partially overlaps with the lip 414 of the mounting groove 411 in the radial direction of the pipe to prevent the sliding tongue 412 of the self-locking unit 4 from being pulled out of the mounting groove 411 of the adjacent self-locking unit 4, while allowing the sliding tongue 412 of the self-locking unit 4 to slide circumferentially in the mounting groove 411 of the adjacent self-locking unit 4, so as to adjust an inner diameter of the annular closed self-locking structure. The mounting groove 411 and the sliding tongue 412 on the self-locking unit 4 make assembly of the product convenient and efficient. The sliding tongue 412 of the self-locking unit 4 is designed with relatively large size, making the product more robust and less prone to damage.

According to one example of the present invention, the self-locking body is provided with a weight-reducing groove 419 and a buffer hole 418. The weight-reducing groove 419 and the buffer hole 418 are designed to reduce the weight of the product, which not only can play a buffering role when the pressurizing device 5 is pressurized, but also can save costs.

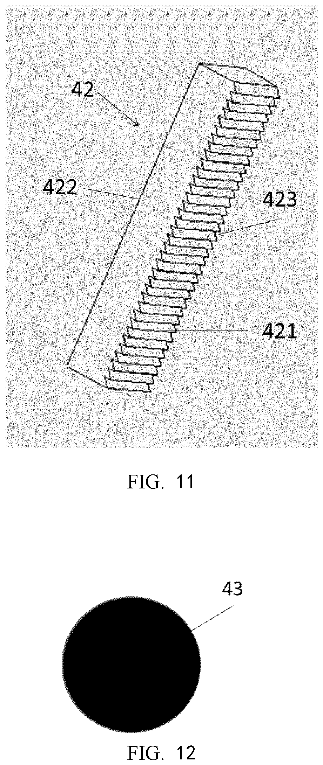

FIG. 11 is a perspective view of the clamping sheet 42 of the self-locking unit 4 shown in FIG. 10. The clamping sheet 42 includes a first surface 423 facing the pipe and an opposite second surface 422, and the first surface 423 is provided with a protrusion 421 for increasing friction with the pipe. According to one example of the present invention, the protrusion 421 may include saw teeth, as shown in FIG. 11. It should be understood that the protrusion 421 may further comprise any other suitable form, such as the protrusion array shown in FIGS. 7A and 7B, without departing from the scope of the present invention.

According to one example of the present invention, the first surface 423 is parallel to a central axis 200 of the pipe, and an angle greater than 0 ° and less than 15 ° is formed between the second surface 422 and the first surface 423, thereby forming a wedge-shaped clamping sheet. According to a first example of the present invention, the angle is 5 °. The design of wedge-shaped clamping sheet 42 prevents the pipe from automatically falling off when the pressurizing device 5 is released. It should be understood that any other suitable angle can be formed between the second surface 422 and the first surface 423 without departing from the scope of the present invention.

According to one example of the present invention, the self-locking unit 4 further comprises an elastic ball 43. FIG. 12 is a perspective view of the elastic ball 43 of the self-locking unit 4 shown in Figure 10. The elastic ball 43 is configured to be axially deformable under the action of a force in the axial direction of the pipe, so that the clamping sheet 42 can move axially relative to the self-locking body 41, thereby increasing clamping force when being pressurized, and accommodating to movement of the pipe.

The present invention has described certain preferred embodiments and variants thereof. After reading and understanding this Description, those skilled in the art may think of other variants and changes. Therefore, the present invention is not limited to particular embodiments disclosed as the best modes for implementing the present invention, and will comprise all embodiments falling within the scope of the claims.

## Claims

1. A pipe connection system (100), comprising:
a sleeve (1) for receiving a pipe;
a sealing assembly (2) for clamping a pipe and axially sealing the pipe; and
a pressurizing device (5), the pressurizing device (5) cooperates with the sleeve (1) to lock the sealing assembly (2) on the pipe;
the sealing assembly (2) comprises a sealing ring (3) and an annular closed self-locking structure formed by a plurality of identical self-locking units (4) connected in series, wherein the self-locking unit (4) comprises a self-locking body (41) and a clamping sheet (42) which is separate from the self-locking body and assembled in the self-locking body,
when the pressurizing device applies axial force, wedge-shaped contact between the pressurizing device and the sleeve axially with the sealing assembly (2) causes a radial force to act on the sealing assembly (2), so that the clamping sheet (42) clamps and locks the pipe and the sealing ring provides axial sealing for the pipe.

2. The pipe connection system (100) according to claim 1, wherein the clamping sheet (42) is made of a material different from the self-locking body (41).

3. The pipe connection system (100) according to claim 2, wherein the clamping sheet (42) is made of metal, and the self-locking body (41) is made of plastic.

4. The pipe connection system (100) according to claim 1, wherein the sealing ring (3) is made of an elastomeric material.

5. The pipe connection system (100) according to claim 1, wherein the self-locking body (41) comprises a first side surface and a second side surface which are arranged opposite to each other in a circumferential direction of the pipe, the first side surface of the self-locking body (41) is provided with at least one mounting groove (411), and the second side surface of the self-locking body (41) is provided with at least one sliding tongue (412), and the at least one sliding tongue (412) protrudes outward from the second side surface, for being inserted into and locked in the at least one mounting groove (411).

6. The pipe connection system (100) according to claim 5, wherein an end of the sliding tongue (412) away from the second side surface is provided with a pair of radial flanges (413), and an end of the mounting groove (411) close to the first side surface is provided with a pair of mating lips (414), when the sliding tongue (412) of one self-locking unit (4) is inserted into the mounting groove (411) of another adjacent self-locking unit (4), the flange (413) of the sliding tongue (412) is elastically expanded and at least partially overlaps with the lip (414) of the mounting groove (411) in a radial direction of the pipe, so as to prevent the sliding tongue (412) of the self-locking unit (4) from being pulled out of the mounting groove (411) of the adjacent self-locking unit (4), while allowing the sliding tongue (412) of the self-locking unit (4) to slide circumferentially in the mounting groove (411) of the adjacent self-locking unit (4), so as to adjust an inner diameter of the annular closed self-locking structure.

7. The pipe connection system (100) according to claim 1, wherein the self-locking body is provided with a weight-reducing groove (419) and a buffer hole (418).

8. The pipe connection system (100) according to claim 1, wherein the clamping sheet (42) comprises a first surface (423) facing the pipe and an opposite second surface (422), and the first surface (423) is provided with a protrusion (421) for increasing friction with the pipe.

9. The pipe connection system (100) according to claim 8, wherein the first surface (423) is parallel to a central axis (200) of the pipe, and an angle greater than 0° and less than 15 ° is formed between the second surface (422) and the first surface (423), thereby forming a wedge-shaped clamping sheet.

10. The pipe connection system (100) according to claim 9, wherein the angle is 5 °.

11. The pipe connection system (100) according to claim 1, wherein the sealing ring (3) comprises an annular body defining a first inclined contact surface (31), a collar portion (32) extending axially inward from a radial inner perimeter of the annular body and defining a first circumferential contact surface, and a flange portion (33) extending radially outward from an axial inner end of the collar portion (32),
the self-locking body (41) comprises a second inclined contact surface (415) in contact with the first inclined contact surface (31) of the sealing ring (3), a second circumferential contact surface (416) in contact with the first circumferential contact surface of the sealing ring (3), and a groove (417) for receiving the flange portion (33) of the sealing ring (3),
the first inclined contact surface (31) of the sealing ring (3) cooperates with the second inclined contact surface (415) of the self-locking body (41), and the first circumferential contact surface of the sealing ring (3) cooperates with the second circumferential contact surface (416) of the self-locking body (41), thereby forming the sealing assembly (2).

12. The pipe connection system (100) according to claim 11, wherein the sealing ring (3) further comprises an axial flange (34) extending axially inward from a radial outer perimeter of the annular body and defining a third circumferential contact surface, a radial outer portion of the self-locking body (41) defines a fourth circumferential contact surface, and the third circumferential contact surface of the sealing ring (3) contacts with the fourth circumferential contact surface of the self-locking body (41).

13. The pipe connection system (100) according to claim 11, wherein an inner perimeter of the collar portion (32) of the sealing ring (3) is provided with a threaded portion (35) to enhance sealing effect.

14. The pipe connection system (100) according to claim 1, wherein the sealing assembly further comprises an elastic ball (43), which is configured to be able to deform axially under the action of a force in the axial direction of the pipe, so that the clamping sheet (42) can move axially relative to the self-locking body (41), thereby increasing clamping force when being pressurized, and accommodating to movement of the pipe.
